# EUROPEAN PATENT SPECIFICATION

(11) **EP 3 950 425 B1**
(45) Date of publication and mention of the grant of the patent: **06.12.2023**
(21) Application number: 20189977.0
(22) Date of filing: 07.08.2020
(51) Int. Cl.: B60P 3/055, B60P 7/12, F17C 13/00, F17C 13/08

(54) **HOLDING STRUCTURE FOR CYLINDER TRAILERS**
TRAGESTRUKTUR FÜR ZYLINDERANHÄNGER
STRUCTURE PORTEUSE POUR REMORQUES DE CYLINDRES

(43) Date of publication of application: 09.02.2022
(73) Proprietor: PICCINI PAOLO S.p.A., 52037 Sansepolcro (AR) (IT)
(72) Inventor: CORBUCCI, Bruno, 52037 Sansepolcro (AR) (IT); TAGLIAFERRI, Erik, 52031 Anghiari (AR) (IT); CARRARA, Paolo, 24030 Valbrembo (BG) (IT)
(74) Representative: Brunacci, Marco

(56) References cited:
- RU-C1- 2 138 411
- US-A- 3 479 043
- US-A- 4 784 399

## Description

### Technical Field

The present invention relates to a holding structure for cylinder trailers.

### Background Art

The cylinder trailer, by definition according to ADR (European Agreement concerning the international carriage of Dangerous goods by Road), is a battery-vehicle provided with a plurality of storage tanks connected to each other by a collector.

The cylinder trailer comprises a supporting surface, on which the storage tanks are fixed in a stable manner, and movement means, such as e.g. wheels, associated with the supporting surface itself.

The cylinder trailer is intended to transport a plurality of storage tanks of a fluid along at least one direction of travel.

Specifically, the cylinder trailer is associable with a driving cab intended to move it along the direction of travel.

Each of the storage tanks is of the type, e.g., of a gas cylinder under pressure and the fluid may be of the type of natural gas, hydrogen, oxygen or other types of gas.

The cylinder trailer is generally used to transport the fluid to supply additional storage tanks or, in the case of natural gas, to feed areas not supplied by the national distribution network or in an emergency situation.

The storage tank generally contains a volume of fluid comprised between 40 and 5000 liters, at a pressure comprised between 200 and 300 bar.

The storage tank comprises at least one main body of elongated conformation, extending along a corresponding longitudinal axis and at least one pair of fittings to take the fluid, arranged at the ends of the main body.

In detail, the main body is provided with a central portion having a substantially cylindrical shape and with a pair of ogival portions, typically ellipsoidal oblate or spheroidal in shape, associated with the ends of the central portion.

Generally, the storage tanks are arranged on the cylinder trailer so that the corresponding longitudinal axes are substantially parallel to the supporting surface and to the direction of travel.

Each storage tank, therefore, comprises a first ogival portion positioned behind the cylinder trailer with respect to the direction of travel and a second ogival portion positioned in front of the cylinder trailer with respect to the direction of travel.

The fittings are associated with the ogival portions and, in particular, a first fitting is associated with the first ogival portion and a second fitting is associated with the second ogival portion.

In other words, the first fittings are arranged behind the cylinder trailer and the second fittings are arranged in front of the cylinder trailer itself.

The first fittings can be connected to a collector system, not shown in the figures, which is adapted to convey the inlet and/or outlet fluid flows from the first fittings themselves and to transfer them to other means of fluid treatment/storage, of the type e.g. of reduction and measurement cabins or storage depots, such as e.g. tank pipes.

The cylinder trailer is also provided with anchoring means, of the type e.g. of saddles, which are adapted to support the storage tanks and to prevent these from moving along at least one direction transverse to the direction of travel.

The anchoring means of known type, however, are not shaped in such a way as to effectively prevent the storage tanks from sliding along a direction parallel to the direction of travel.

In case of a sudden stop of the cylinder trailer, which causes acceleration along the direction of travel beyond a certain threshold, the tanks can slide forward, up to the driver's cab of the engine, thus being extremely dangerous for the operators driving.

For this reason, the cylinder trailers of known type are provided with holding means, of the type of a metal plate, which are positioned in front of the cylinder trailer itself and that abut against the front ogival part of the tanks, thus preventing the storage tanks from sliding along a direction parallel to the direction of travel.

However, this solution makes the second fittings inaccessible and unusable and considerably limits the possibilities of use of the cylinder trailer, in which it is possible, therefore, to take the fluid only at the rear, i.e. from the first fittings, making the transfer times of the fluid itself rather long.

This drawback is particularly felt when the cylinder trailer is used to supply areas in emergency situations where it may be essential to supply the fluid quickly to meet the needs.

A holding structure of the known type is also disclosed in document RU2138411C1.

### Description of the Invention

The main aim of the present invention is to devise a holding structure for cylinder trailers that allows effectively holding the storage tanks along at least one direction parallel to the direction of travel.

A further object of the present invention is to devise a holding structure for cylinder trailers that allows taking the fluid also through the second fittings of the storage tanks.

Yet another object of the present invention is to devise a holding structure for cylinder trailers that allows effectively supporting the storage tanks along a direction transverse to the direction of travel.

Another object of the present invention is to devise a holding structure for cylinder trailers that allows overcoming the aforementioned drawbacks of the prior art in a simple, rational, easy, effective to use and low-cost solution.

The objects set out above are achieved by the present holding structure for cylinder trailers having the characteristics of claim 1.

### Brief Description of the Drawings

Other characteristics and advantages of the present invention will be more evident from the description of a preferred, but not exclusive, embodiment of a holding structure for cylinder trailers, illustrated by way of an indicative, yet non-limiting example, in the attached tables of drawings in which:
Figures 1 and 2 are axonometric views of a first embodiment of the holding structure according to the invention, associated with a cylinder trailer, from different angles;
Figure 3 is a front view of the holding structure of Figures 1 and 2;
Figure 4 is a sectional view of the holding structure according to the IV-IV plane of Figure 3;
Figures 5 and 6 are schematic representations, axonometric and lateral, respectively, of a second embodiment;
Figures 7 and 8 are schematic representations, axonometric and lateral, respectively, of a third embodiment;
Figures 9 and 10 are schematic representations, axonometric and lateral, respectively, of a fourth embodiment;
Figures 11 and 12 are schematic representations, axonometric and lateral, respectively, of a fifth embodiment;
Figures 13 and 14 are schematic representations, axonometric and lateral, respectively, of a sixth embodiment;
Figures 15 and 16 are schematic representations, axonometric and lateral, respectively, of a seventh embodiment;
Figures 17 and 18 are schematic representations, axonometric and lateral, respectively, of an eight embodiment;
Figure 19 is a schematic representation that shows some possible conformations of the work surfaces of the holding element of Figures 13 to 18.

### Embodiments of the Invention

With particular reference to these figures, reference numeral 1 globally indicates a holding structure for cylinder trailers.

The holding structure 1 comprises at least one load-bearing frame 2 that can be attached to the cylinder trailer C.

In the context of the present discussion, the term "cylinder trailer" means a road vehicle comprising a supporting surface P and movement means, such as e.g. wheels, associated with the latter.

The supporting surface P is substantially parallel to the ground.

The cylinder trailer C is intended for the transport of a plurality of storage tanks B of a fluid along at least one direction of travel D.

Specifically, the cylinder trailer C is associable with a driving cab M intended to move it along the direction of travel D.

Each of the storage tanks B is of the type, e.g., of a gas cylinder under pressure and the fluid may be of the type of natural gas, hydrogen, oxygen or other types of gas.

The storage tank B contains a volume of fluid comprised between approximately 500 and 4000 liters, at a pressure comprised between 200 and 300 bar.

Each of the storage tanks B comprises at least one main body E, G1, G2 of elongated conformation, extending along a corresponding longitudinal axis L, and at least one pair of fittings R1, R2 for taking the fluid, arranged at the ends of the main body E, G1, G2.

The main body E, G1, G2 is provided with:
- a central portion E substantially cylindrical in shape and having a diameter F; and
- a pair of ogival portions G1, G2 associated with the ends of the central portion E.

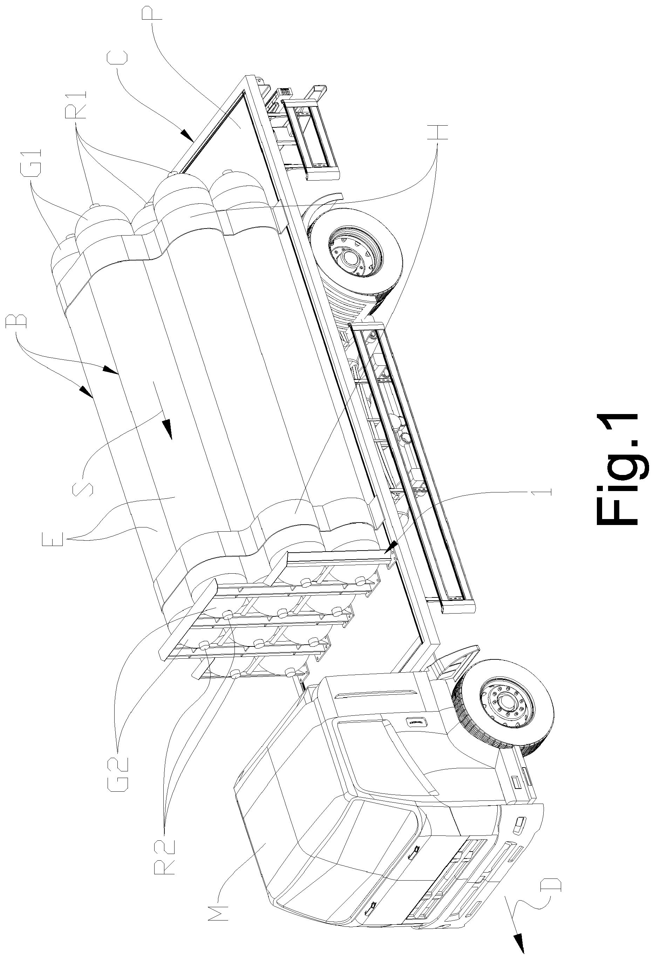

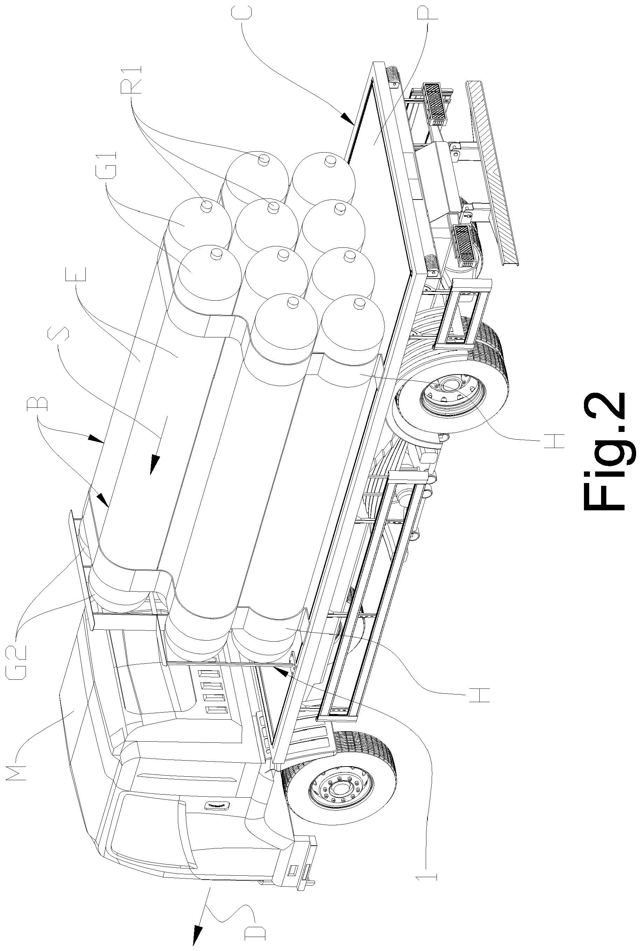

As shown in the Figures 1 and 2, the storage tanks B are arranged on the cylinder trailer C so that the corresponding longitudinal axes L are substantially parallel to the supporting surface P and to the direction of travel D.

Each storage tank B comprises, therefore, a first ogival portion G1 positioned behind the cylinder trailer C with respect to the direction of travel D and a second ogival portion G2 positioned in front of the cylinder trailer C with respect to the direction of travel D.

The fittings R1, R2 are associated with the ogival portions G1, G2.

In particular, a first fitting R1 is associated with the first ogival portion G1 and a second fitting R2 is associated with the second ogival portion G2.

In other words, the first fittings R1 are arranged behind the cylinder trailer C and the second fittings R2 are arranged in front of the cylinder trailer itself.

The first fittings R1 are connectable to a collector system, not shown in the figures, which is adapted to convey the inlet and outlet fluid flows from the first fittings themselves and to transfer them to additional treatment/storage means of the fluid.

For example, the treatment/storage means can be of the type of reduction cabins or storage depots, such as e.g. tank pipes.

The cylinder trailer C is also provided with anchoring means H, such as e.g. of the type of saddles, adapted to sustain the storage tanks B and to prevent these from moving along at least one direction transverse to the direction of travel D. The load-bearing frame 2 can be associated in front of the cylinder trailer C, on the supporting surface P.

The load-bearing frame 2 comprises a plurality of framing elements 2a, such as e.g. of the type of metal bars, arranged together to form a grid.

According to the invention, the holding structure 1 comprises at least one holding element 3, 13, 23, 33, 43, 53 associated with the load-bearing frame 2 and adapted to hold at least one corresponding storage tank B.

More in detail, the holding structure 1 comprises a plurality of holding elements 3, 13, 23, 33, 43, 53 associated with the load-bearing frame 2, each adapted to hold at least one of the storage tanks B.

Each holding element 3, 13, 23, 33, 43, 53 is locked together with the framing elements 2a.

The holding element 3, 13, 23, 33, 43, 53 has the function of keeping the corresponding storage tank B stationary during the transit of the cylinder trailer C along the direction of travel D.

The holding element 3, 13, 23, 33, 43, 53 defines at least one work surface 4 adapted to abut against at least a corresponding second ogival portion G2 and to prevent the corresponding storage tank B from shifting along at least one direction of sliding S substantially parallel to the direction of travel D.

More in detail, the direction of sliding S matches the direction of travel D. In other words, the holding element 3, 13, 23, 33, 43, 53 prevents the storage tank B from sliding forward, e.g. in the event of an abrupt stop of the cylinder trailer C.

The holding element 3, 13, 23, 33, 43, 53 is, therefore, shaped so as to contact the second ogival portion G2 and keep the second fitting R2 free.

The second fittings R2 are therefore accessible and can also be connected to a collector system, not shown in the figures, adapted to convey the outlet fluid flows from the second fittings themselves and to transfer them to other treatment/storage means of the fluid. Alternatively or in combination, the second fittings R2 can be connected to a safety system, such as e.g. of the type of a plurality of vent valves, adapted to allow the possible leakage of the fluid being in overpressure.

Conveniently, the work surface 4 is made of an anti-slip material.

The expression "anti-slip material" means a material, preferably of the plastic and/or polymeric type, able to increase the friction between the work surface 4 and the surface of the second ogival portion G2, helping to keep the latter stationary.

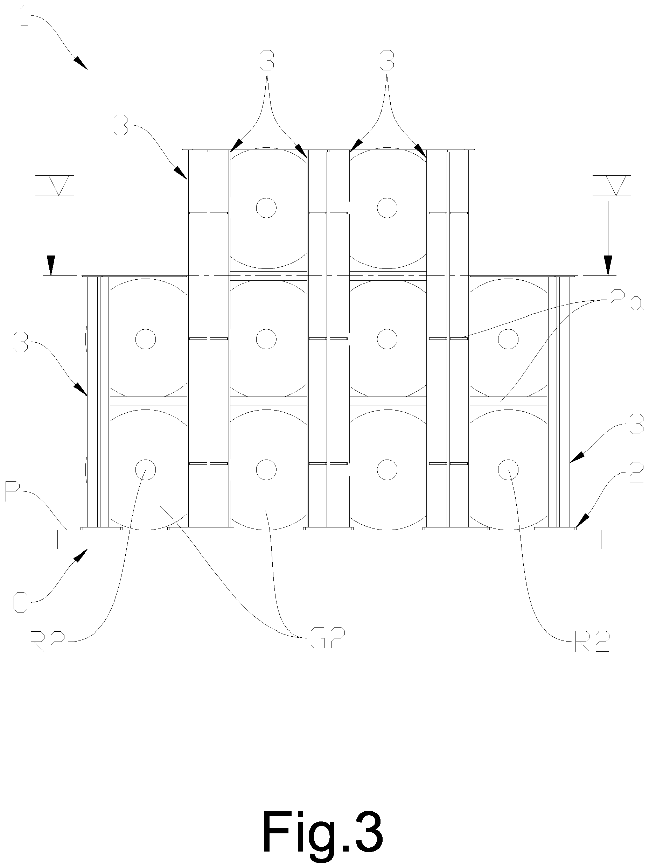

According to the invention, shown in Figures 1 to 4, the holding element 3 is of the slab-shaped type and lies on an inclined plane of development I with respect to the direction of travel D.

This embodiment provides that the work surface 4 is substantially flat.

The second ogival portion G2 contacts the work surface 4 in a substantially punctiform manner.

In the context of the present discussion, the expression "substantially punctiform" means that the contact area between the surface of the second ogival portion G2 and the work surface 4 is reduced, being one flat and the other curved.

The holding element 3 is conveniently shaped so as to hold a plurality of storage tanks B.

As shown in Figures 1 to 4, in fact, the holding element 3 is of the type of a metal flat bar with a length at least twice the diameter F. The holding element 3 is, therefore, able to hold at least two storage tanks B placed one on top of the other.

Preferably, the holding structure 1 comprises at least one pair of holding elements 3 each lying on a corresponding plane of development I, arranged inclined and converging to each other with respect to the direction of sliding S.

The expression "converging to each other with respect to the direction of sliding" means that the planes of development I ideally meet on an axis arranged in front of the second ogival portion G2.

This layout makes it possible to prevent further movements of the second ogival portion G2 along directions transverse to the direction of sliding S.

Preferably, each of the holding elements 3 is arranged at an angle substantially equal to 45° with respect to the direction of sliding S.

In other words, the holding elements 3 are arranged on planes of development I substantially orthogonal to each other.

With particular reference to Figures 1 to 4, the plane of development I is substantially vertical.

The pair of holding elements 3 therefore allows preventing the second ogival portion G2 from displacing along a substantially horizontal and perpendicular direction to the direction of sliding S.

Conveniently, the minimum distance between the holding elements 3 is less than the diameter F of the central portion E and more than the width of the second fitting R2.

In the context of the present discussion, the term "width of the second fitting" means a dimension of the second fitting R2 transverse to the longitudinal axis L of the storage tank B. For example, if the second fitting R2 is substantially cylindrical in shape, as shown in the figures, the width corresponds to the diameter of such a cylinder.

During the installation of the cylinder trailer C, each storage tank B is arranged in such a way that the second fitting R2 is inserted between the pair of holding elements 3 and that the second ogival portion G2 is placed in contact with the work surface 4.

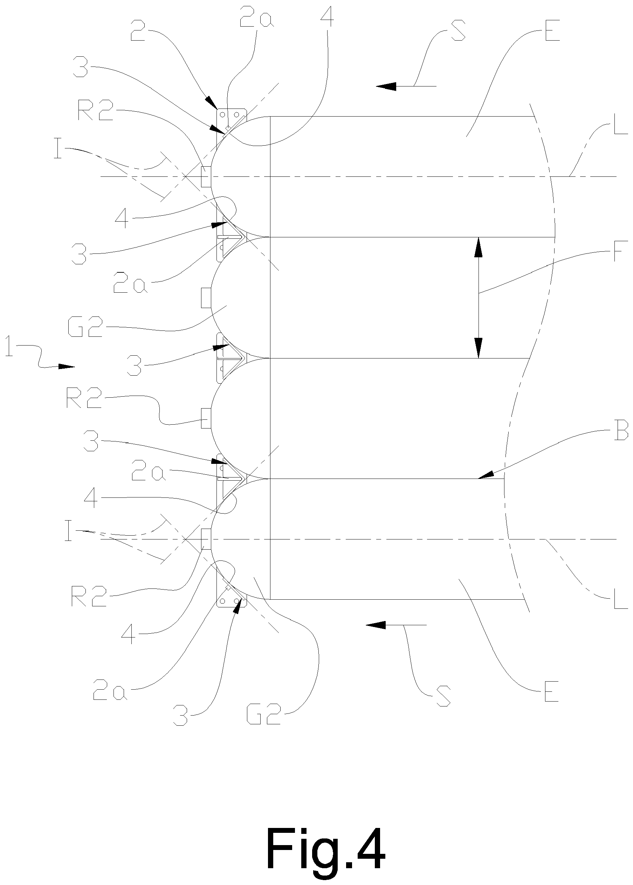

As shown in Figure 4, the second fitting R2 is, therefore, placed in front of the holding elements 3 with respect to the direction of travel D and accessible to an operator.

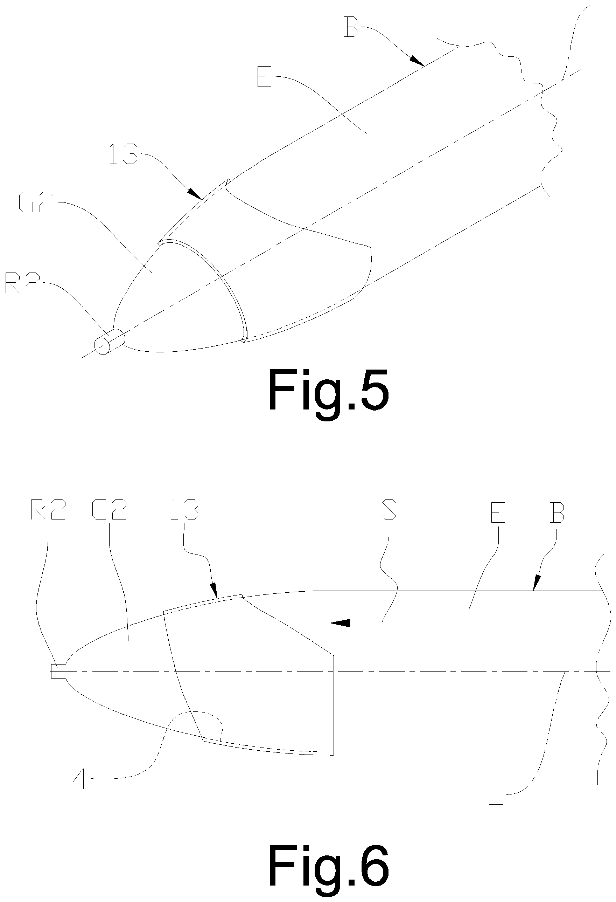

Figures 5 to 19 show further embodiments wherein the holding element 13, 23, 33, 43, 53 is shaped to wrap at least partly the second ogival portion G2.

In such embodiments, the work surface 4 is curved.

Similarly to what has been described above, the work surface 4 can be made of an anti-slip material.

Conveniently, the holding element 13, 23, 33, 43, 53 defines at least one work surface 4 having a shape at least partly substantially complementary to the shape of the second ogival portion G2.

In the context of the present discussion, the expression "substantially complementary" means that the two surfaces are complementary in shape net of construction inaccuracies.

With particular reference to the embodiments shown in Figures 5 to 12, each holding element 13, 23, 33, 43 is adapted to hold a single storage tank B.

In a second embodiment shown in Figures 5 and 6, the holding element 13 is of the type of a metal band and almost completely wraps the second ogival portion G2.

The work surface 4 is defined inside the holding element 13.

The holding element 13 is adapted to prevent the storage tank B from moving along the direction of sliding S and, at the same time, the second ogival portion G2 from moving along further directions transverse to the latter.

The holding element 13 comprises an upper portion and a lower portion, with respect to a horizontal plane J passing through the longitudinal axis L. The lower portion has a larger surface area than the corresponding upper portion, meaning that the lower portion wraps the second ogival portion G2 by a larger contact area than the upper portion.

This shape of the holding element 13 gives a vertical support to the second ogival portion G2 and, at the same time, facilitates the insertion thereof during the installation phase of the cylinder trailer C.

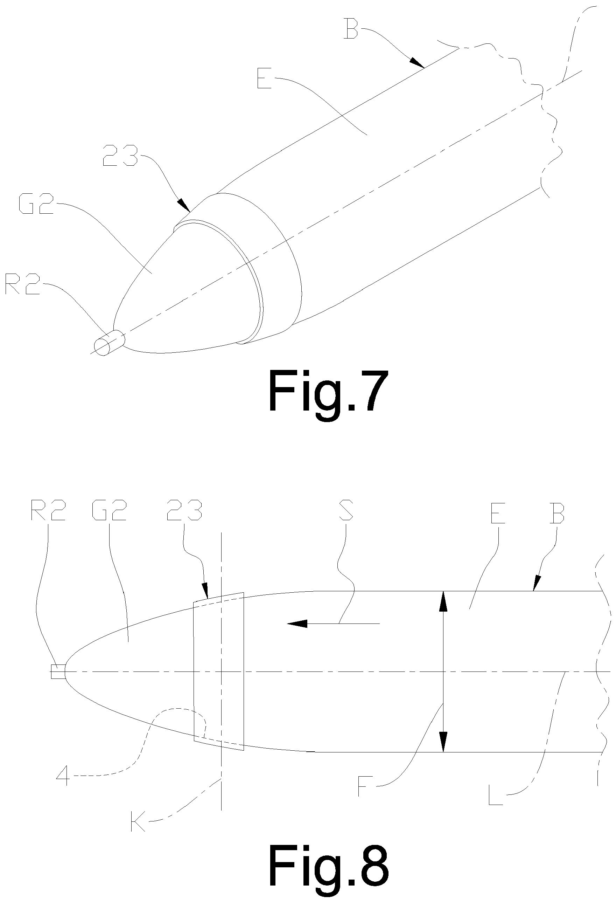

In accordance with further embodiments shown in Figures 7 to 12, the holding element 23, 33, 43 is ring-shaped and lies on a lying plane K transverse to the direction of sliding S.

The center of the holding element 23, 33, 43 lies on the longitudinal axis L of the storage tank B.

In these embodiments, the work surface 4 is defined inside the holding element 23, 33, 43.

Similarly to the above, the holding element 23, 33, 43 is shaped so as to wrap at least partly the second ogival portion G2 and the work surface 4 is at least partly substantially complementary to the latter.

More in detail, the work surface 4 is substantially truncated-ogival in shape, converging with respect to the direction of travel D.

The expression "converging with respect to the direction of travel" means that the work surface 4 defines a portion of ogive, the ideal vertex of which is arranged in front of the second ogival portion G2 with respect to the direction of travel D. In addition, this vertex lies on the longitudinal axis L of the storage tank B.

Advantageously, the minimum diameter of the holding element 23, 33, 43 is smaller than the diameter F of the central portion E and larger than the width of the second fitting R2.

In accordance with a third embodiment shown in Figures 7 and 8, the lying plane K of the holding element 23 is substantially perpendicular to the longitudinal axis L.

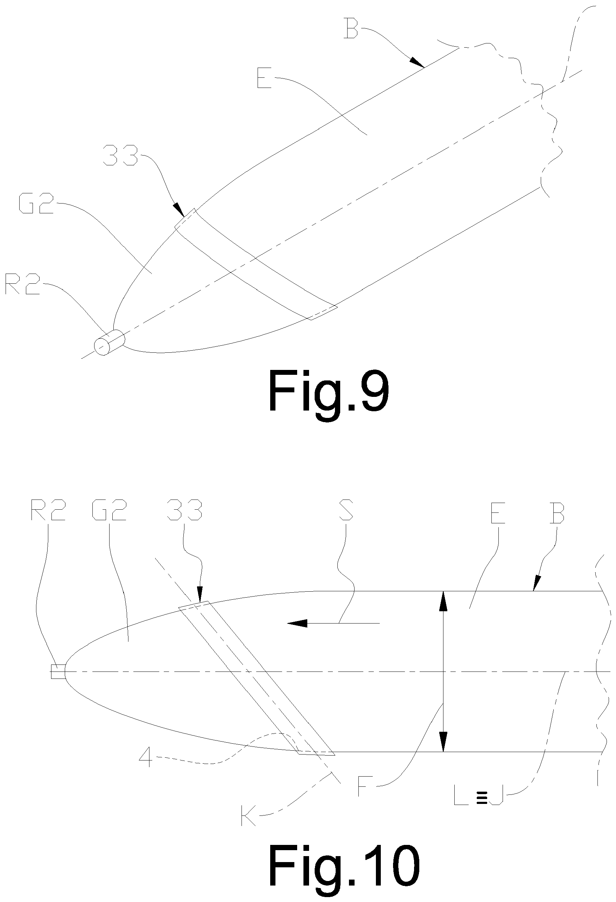

Figures 9 and 10, on the other hand, show a fourth embodiment in which the holding element 33 lies on a lying plane K which is inclined with respect to the horizontal plane J passing through the longitudinal axis L.

The holding element 33 comprises an upper portion and a lower portion, with respect to the horizontal plane J, in which the upper portion is arranged in front of the lower portion with respect to the direction of travel D.

This shape allows giving an effective support to the second ogival portion G2 and at the same time facilitates the insertion thereof inside the holding element 33 during the installation of the cylinder trailer C.

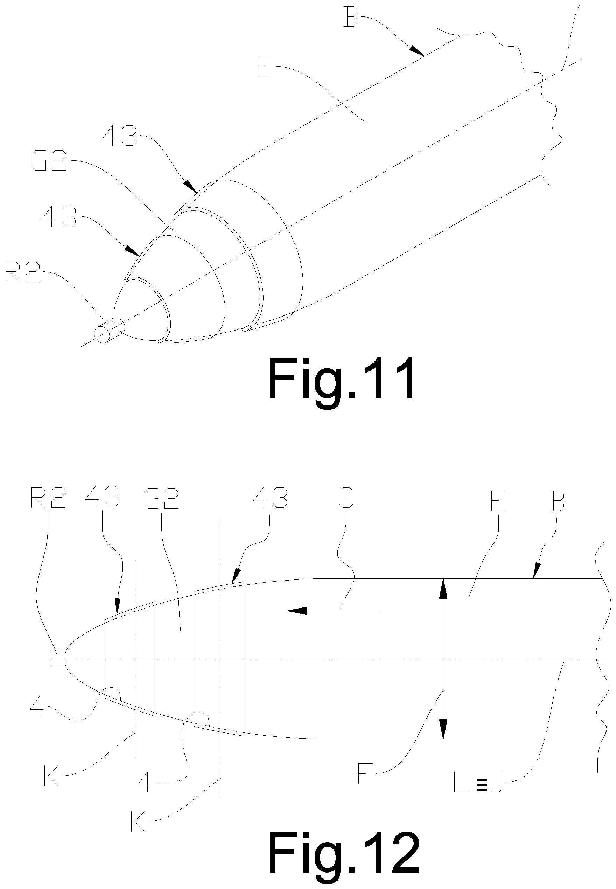

In accordance with a fifth embodiment shown in Figures 11 and 12, the holding structure 1 comprises at least two holding elements 43 arranged in succession to each other with respect to the direction of travel D and in which the respective centers lie on the longitudinal axis L.

This embodiment provides greater vertical support to the second ogival portion G2 and ensures effective holding of the storage tank B, especially in the case of large storage tanks.

The holding elements 43 are ring-shaped and are substantially similar to the holding elements 23 and 33, to the detailed description of which reference should be made.

In particular, Figures 11 and 12 show an embodiment wherein both the holding elements 43 lie on the corresponding lying planes K substantially perpendicular to the longitudinal axis L.

Embodiments cannot however be ruled out wherein the lying planes K are inclined with respect to the horizontal plane J passing through the longitudinal axis L.

Embodiments cannot however be ruled out wherein one of the holding elements 43 lies on a corresponding lying plane K perpendicular to the direction of sliding S and the other of the holding elements 43 lies on a lying plane K which is inclined with respect to the horizontal plane passing through the longitudinal axis L.

It cannot also be ruled out that the holding structure 1 may comprise more than two holding elements 43, arranged in succession to each other with respect to the direction of travel D and in which the respective centers lie on the longitudinal axis L.

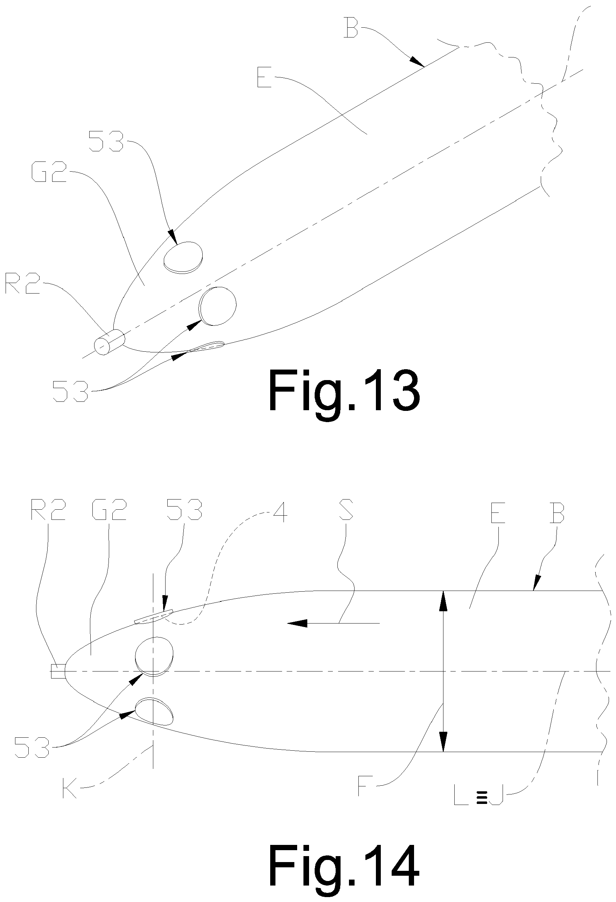

Figures 13 to 18 show further embodiments wherein the holding structure 1 comprises a plurality of holding elements 53 arranged discontinuously on the second ogival portion G2.

The corresponding work surfaces 4 are curved and partly complementary in shape to the shape of the second ogival portion G2.

In other words, each of the holding elements 53 partly covers the second ogival portion G2.

These embodiments provide, therefore, that each second ogival portion G2 is held by a plurality of holding elements 53.

With particular reference to the embodiments shown in Figures 13 to 16, the holding elements 53 are arranged in a ring pattern that lies on a lying plane K transverse to the direction of sliding S.

The center of the ring lies on the longitudinal axis L.

Conveniently, the minimum diameter of the ring is smaller than the diameter F of the central portion E and larger than the width of the second fitting R2.

In particular, according to a sixth embodiment, shown in Figures 13 and 14, the lying plane K of the ring is substantially perpendicular to the direction of sliding S.

The holding elements 53 are therefore arranged substantially equidistant from the center of the ring, i.e. from the longitudinal axis L.

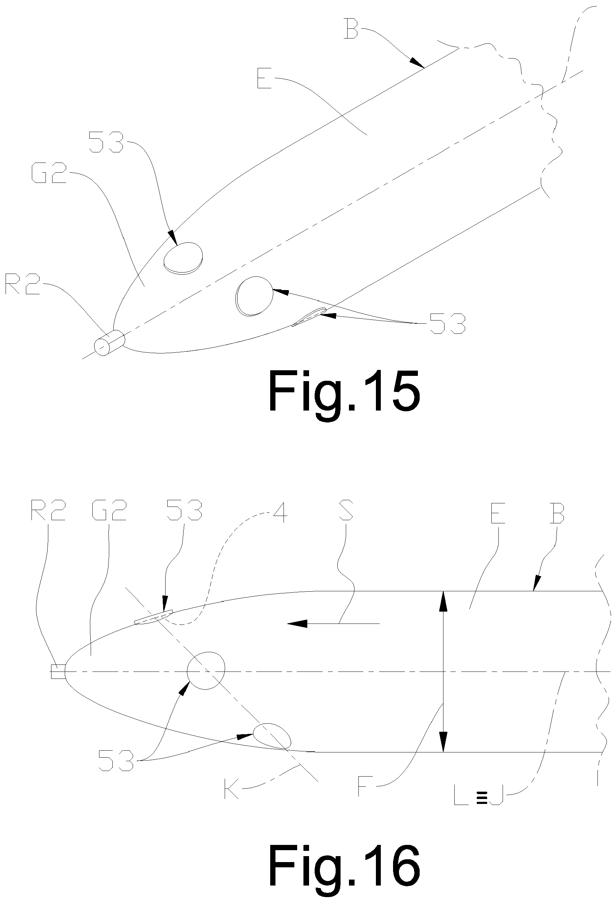

In accordance with a seventh embodiment shown in Figures 15 and 16, on the other hand, the lying plane K of the ring is inclined with respect to the horizontal plane J passing through the longitudinal axis L.

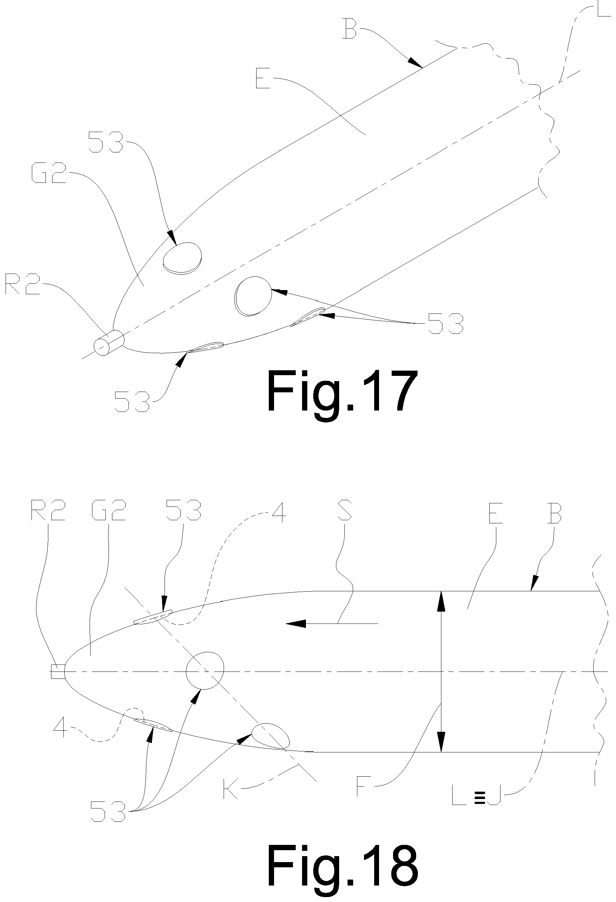

Again, in accordance with an eighth embodiment, shown in Figures 17 and 18, some holding elements 53 are arranged in a ring pattern, while an additional holding element 53 is placed below the second ogival portion G2, with respect to the horizontal plane J, in order to give greater vertical support to the second ogival portion itself.

In Figures 13 to 18, the holding elements 53 are substantially circular in shape and the corresponding work surfaces 4 are, in turn, substantially circular.

It cannot however be ruled out that the work surface 4 is of different conformation.

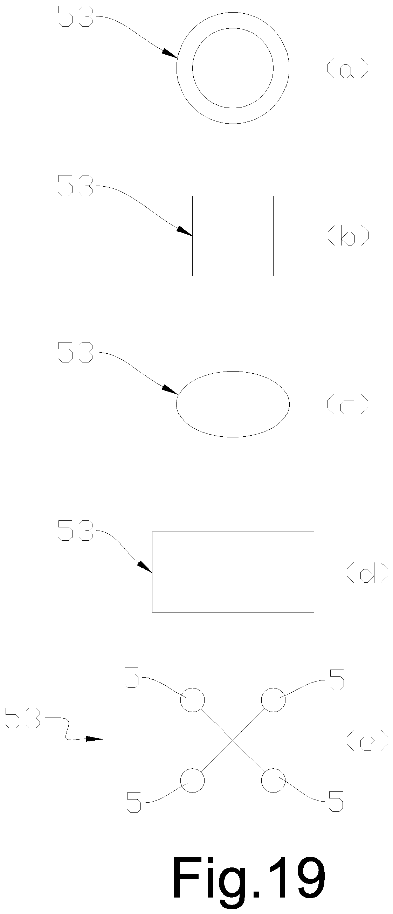

Figure 19 shows further possible conformations of the work surface 4 by way of example.

The work surface 4 can be toroidal (Figure 19(a)), square (Figure 19(b)), oval (Figure 19(c)), rectangular (Figure 19(d)) or formed by a plurality of holding portions 5 associated with each other (Figure 19(e)).

It cannot also be ruled out that each of the holding elements 53 is different in shape to the other holding elements 53.

It has in practice been ascertained that the described invention achieves the intended objects and in particular it is emphasized the fact that the holding structure according to the present invention allows effectively holding the storage tanks along at least the direction of sliding and allows taking the fluid also through the second fittings of the storage tanks.

This result is obtained thanks to the particular conformation and/or layout of the holding elements that allows preventing the storage tank from sliding and, at the same time, keeps the corresponding second fitting free and accessible.

In addition, the present holding structure allows the storage tanks to be effectively supported along a direction transverse to the direction of travel.

## Claims

1. Holding structure (1) for cylinder trailers, comprising at least one load-bearing frame (2) that can be attached to a cylinder trailer (C) intended to transport a plurality of storage tanks (B) of a fluid along at least one direction of travel (D), each of said storage tanks (B) comprising:
- at least one main body (E, G1, G2) of elongated conformation extending along a corresponding longitudinal axis (L) and comprising:
- a central portion (E) substantially cylindrical in shape having a diameter (F); and
- a pair of ogival portions (G1, G2) associated with the ends of said central portion (E), wherein a first ogival portion (G1) is positioned behind said cylinder trailer (C) with respect to said direction of travel (D) and a second ogival portion (G2) is positioned in front of said cylinder trailer (C) with respect to said direction of travel (D);
- at least one pair of fittings (R1, R2) for taking and/or loading said fluid, arranged at the ends of said main body (E, G1, G2), wherein a first fitting (R1) is associated with said first ogival portion (G1) and a second fitting (R2) is associated with said second ogival portion (G2);
- at least one holding element (3) associated with said load-bearing frame (2), adapted to hold at least one corresponding storage tank (B) and defining at least one work surface (4) adapted to abut against at least one corresponding second ogival portion (G2) and to prevent the storage tank itself from shifting along at least one direction of sliding (S) substantially parallel to said direction of travel (D);
**characterized by** the fact that said holding element (3) is of the slab-shaped type and lies on a plane of development (I) which is inclined with respect to said direction of sliding (S), said work surface (4) being substantially flat.

2. Holding structure (1) according to claim 1, **characterized by** the fact that said holding element (3) is of the type of a metal flat bar having a length at least twice said diameter (F).

3. Holding structure (1) according to one or more of the preceding claims, **characterized by** the fact that it comprises at least one pair of said holding elements (3) each lying on a corresponding plane of development (I), arranged inclined and converging to each other with respect to said direction of sliding (S).

4. Holding structure (1) according to one or more of the preceding claims, **characterized by** the fact that said plane of development (I) is substantially vertical.

5. Holding structure (1) according to one or more of the preceding claims, **characterized by** the fact that the minimum distance between said holding elements (3) is less than said diameter (F) of the central portion (E) and more than the width of said second fitting (R2).

## Patentansprüche

1. Haltestruktur (1) für Flaschenanhänger, umfassend mindestens einen tragenden Rahmen (2), der an einem Flaschenanhänger (C) befestigt werden kann, der dazu bestimmt ist, eine Vielzahl von Speicherbehältern (B) eines Fluids entlang mindestens einer Fortbewegungsrichtung (D) zu transportieren, wobei jeder der Speicherbehälter (B) Folgendes umfasst:
- mindestens einen Hauptkörper (E, G1, G2) mit länglicher Form, der sich entlang einer entsprechenden Längsachse (L) erstreckt und umfasst:
- einen zentralen Abschnitt (E) von im Wesentlichen zylindrischer Form mit einem Durchmesser (F); und
- ein Paar von ogivalen Abschnitten (G1, G2), die den Enden des zentralen Abschnitts (E) zugeordnet sind, wobei ein erster ogivaler Abschnitt (G1) hinter dem Flaschenanhänger (C) in Bezug auf die Fortbewegungsrichtung (D) und ein zweiter ogivaler Abschnitt (G2) vor dem Flaschenanhänger (C) in Bezug auf die Fortbewegungsrichtung (D) angeordnet ist;
- mindestens ein Paar Armaturen (R1, R2) zum Entnehmen von und/oder Beladen mit dem Fluid, die an den Enden des Hauptkörpers (E, G1, G2) angeordnet sind, wobei eine erste Armatur (R1) dem ersten ogivalen Abschnitt (G1) zugeordnet ist und eine zweite Armatur (R2) dem zweiten ogivalen Abschnitt (G2) zugeordnet ist;
- mindestens ein dem tragenden Rahmen (2) zugeordnetes Halteelement (3), das ausgebildet ist, um mindestens einen entsprechenden Speicherbehälter (B) zu halten, und das mindestens eine Arbeitsfläche (4) definiert, die ausgebildet ist, um an mindestens einem entsprechenden zweiten ogivalen Abschnitt (G2) anzuliegen und zu verhindern, dass sich der Speicherbehälter selbst entlang mindestens einer Gleitrichtung (S) im Wesentlichen parallel zu der Fortbewegungsrichtung (D) verschiebt;
**dadurch gekennzeichnet, dass** das Halteelement (3) vom plattenförmigen Typ ist und auf einer Abwicklungsebene (I) liegt, die in Bezug auf die Gleitrichtung (S) geneigt ist, wobei die Arbeitsfläche (4) im Wesentlichen flach ist.

2. Haltestruktur (1) nach Anspruch 1, **dadurch gekennzeichnet, dass** das Halteelement (3) vom Typ eines Metallflachstabs ist und eine Länge von mindestens dem Doppelten des Durchmessers (F) aufweist.

3. Haltestruktur (1) nach einem oder mehreren der vorhergehenden Ansprüche, **dadurch gekennzeichnet, dass** sie mindestens ein Paar der Halteelemente (3) umfasst, die jeweils auf einer entsprechenden Abwicklungsebene (I) liegen und in Bezug auf die Gleitrichtung (S) geneigt und konvergierend zueinander angeordnet sind.

4. Haltestruktur (1) nach einem oder mehreren der vorhergehenden Ansprüche, **dadurch gekennzeichnet, dass** die Abwicklungsebene (I) im Wesentlichen vertikal ist.

5. Haltestruktur (1) nach einem oder mehreren der vorhergehenden Ansprüche, **dadurch gekennzeichnet, dass** der Mindestabstand zwischen den Halteelementen (3) kleiner als der Durchmesser (F) des zentralen Abschnitts (E) und größer als die Breite der zweiten Armatur (R2) ist.

## Revendications

1. - Structure de maintien (1) pour remorques de cylindres, comprenant au moins un cadre porteur (2) qui peut être fixé à une remorque de cylindres (C) destinée à transporter une pluralité de réservoirs de stockage (B) d'un fluide le long d'au moins une direction de déplacement (D), chacun desdits réservoirs de stockage (B) comprenant :
- au moins un corps principal (E, G1, G2) de forme allongée s'étendant le long d'un axe longitudinal correspondant (L) et comprenant :
- une partie centrale (E) de forme sensiblement cylindrique ayant un diamètre (F) ; et
- une paire de parties ogivales (G1, G2) associées aux extrémités de ladite partie centrale (E), une première partie ogivale (G1) étant positionnée derrière ladite remorque de cylindres (C) par rapport à ladite direction de déplacement (D) et une seconde partie ogivale (G2) étant positionnée devant ladite remorque de cylindres (C) par rapport à ladite direction de déplacement (D) ;
- au moins une paire de raccords (R1, R2) pour prélever et/ou charger ledit fluide, disposés aux extrémités dudit corps principal (E, G1, G2), un premier raccord (R1) étant associé à ladite première partie ogivale (G1) et un second raccord (R2) étant associé à ladite seconde partie ogivale (G2) ;
- au moins un élément de maintien (3) associé audit cadre porteur (2), apte à maintenir au moins un réservoir de stockage correspondant (B) et définissant au moins une surface de travail (4) apte à venir en butée contre au moins une seconde partie ogivale correspondante (G2) et à empêcher le réservoir de stockage lui-même de se déplacer le long d'au moins une direction de glissement (S) sensiblement parallèle à ladite direction de déplacement (D) ;
**caractérisée par le fait que** ledit élément de maintien (3) est du type en forme de plaque et s'étend sur un plan de développement (1) qui est incliné par rapport à ladite direction de glissement (S), ladite surface de travail (4) étant sensiblement plate.

2. - Structure de maintien (1) selon la revendication 1, **caractérisée par le fait que** ledit élément de maintien (3) est du type d'un plat métallique ayant une longueur d'au moins deux fois ledit diamètre (F).

3. - Structure de maintien (1) selon une ou plusieurs des revendications précédentes, **caractérisée par le fait qu'**elle comprend au moins une paire desdits éléments de maintien (3) s'étendant chacun sur un plan de développement correspondant (I), disposés de manière inclinée et convergeant l'un vers l'autre par rapport à ladite direction de glissement (S).

4. - Structure de maintien (1) selon une ou plusieurs des revendications précédentes, **caractérisée par le fait que** ledit plan de développement (I) est sensiblement vertical.

5. - Structure de maintien (1) selon une ou plusieurs des revendications précédentes, **caractérisée par le fait que** la distance minimale entre lesdits éléments de maintien (3) est inférieure audit diamètre (F) de la partie centrale (E) et supérieure à la largeur dudit second raccord (R2).
